(19) Europäisches Patentamt
European Patent Office
Office européen des brevets

(11) **EP 2 874 202 B1**

(12) **EUROPEAN PATENT SPECIFICATION**

(45) Date of publication and mention
of the grant of the patent:
**16.05.2018 Bulletin 2018/20**

(51) Int Cl.:
*H01M 10/052* (2010.01)   *H01M 10/0525* (2010.01)
*H01M 10/058* (2010.01)   *H01M 10/0585* (2010.01)
*H01M 10/0587* (2010.01)

(21) Application number: **14193619.5**

(22) Date of filing: **18.11.2014**

(54) **Separator, lithium battery including the same, method of manufacturing the separator, and method of manufacturing the lithium battery**

Separator, Lithiumbatterie damit, Verfahren zur Herstellung des Separators und Verfahren zur Herstellung der Lithiumbatterie

Séparateur, batterie au lithium comprenant celui-ci, procédé de fabrication du séparateur et procédé de fabrication de la batterie au lithium

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2013 KR 20130140888**

(43) Date of publication of application:
**20.05.2015 Bulletin 2015/21**

(73) Proprietor: **Samsung SDI Co., Ltd.**
**Yongin-si, Gyeonggi-do (KR)**

(72) Inventors:
• **KIM, Youngsu**
**Choongchungnamdo (KR)**
• **MOON, Jungjin**
**Gyeonggi-do (KR)**
• **JO, Yunkyung**
**Gyeonggi-do (KR)**
• **KIM, Ihn**
**Gyeonggi-do (KR)**
• **KIM, Chanjung**
**Gyeonggi-do (KR)**
• **PARK, Narae**
**Gyeonggi-do (KR)**
• **SON, Sukjung**
**Gyeonggi-do (KR)**

(74) Representative: **Mounteney, Simon James**
**Marks & Clerk LLP**
**90 Long Acre**
**London**
**WC2E 9RA (GB)**

(56) References cited:
**WO-A2-2009/096671    US-A- 4 973 532**

EP 2 874 202 B1

**Description**

BACKGROUND

1. Field

Embodiments of the present invention relate to a separator, a lithium battery including the same, a method of manufacturing the separator, and a method of manufacturing the lithium battery.

2. Description of the Related Art

Demand has increased for secondary batteries for use in portable electronic devices for information and communication, such as personal digital assistants (PDAs), mobile phones, notebook computers, electric bikes, electric vehicles, and the like. With a trend toward smaller and lightweight electronic devices, rechargeable lithium batteries, which are small in size, are lightweight, and have high capacity, are practically used.

WO 03/012896 A1 relates to a porous separator on which a polymer binder component is dispersed at the surface portion.

WO 2009/096671 A2 relates to a separator in which a porous coating layer made of a mixture of a binder polymer and inorganic particles is formed on the surface of a porous substrate.

SUMMARY

In a first aspect of the present invention is provided a separator including an organic-inorganic hybrid coating layer on at least one surface of a porous base, and a pattern coating layer on a surface of the organic-inorganic hybrid coating layer. The pattern coating layer includes patterns having an average diameter of 0.1 mm or less that are regularly spaced apart from each other at an interval having a value in the range of 5 $\mu$m to 50 $\mu$m, wherein a total area of the pattern coating layer is in a range of about 30% to about 50% based on a total area of the separator, wherein the patterns are adhesive polymer particles.

The patterns may have an average diameter of about 0.0001 mm to about 0.1 mm.

The pattern coating layer may be configured as dot patterns that are regularly spaced apart from each other.

The patterns of the pattern coating layer may include a water-base dispersion-type polymer structure.

The patterns of the pattern coating layer include at least one polymer structure selected from polyethylene, polypropylene, ethylene propylene copolymer, polyvinyl chloride, polyvinylidene chloride, polyvinylidene fluoride, polystyrene, polyacrylonitrile, polytetrafluoroethylene, polymethacrylate, polymethyl methacrylate, polyvinyl acetate, polyisoprene, polychloroprene, polyester, polycarbonate, polyamide, polyacrylate, polyurethane, polyethylene oxide, acrylonitrile-butadiene-styrene copolymer, polyoxyethylene, polyoxymethylene, polyoxypropylene, styrene-acrylonitrile copolymer, acrylonitrile-styrene-acrylate copolymer, styrene-butadiene copolymer, acrylated styrene-butadiene copolymer, acrylonitrile-butadiene copolymer, acryl rubber, butyl rubber, fluorine rubber, phenol resin, epoxy resin, polyvinylpyrrolidone, polyepichlorohydrin, polyphosphazene, ethylene-propylene-diene copolymer, polyvinylpyridine, chloro-sulfonated polyethylene, polysulfone, polyvinylalcohol, thermoplastic polyester rubber (PTEE), carboxymethylcellulose, hydroxypropylmethylcellulose, hydroxypropylcellulose, and diacetylcellulose.

The organic-inorganic hybrid coating layer may include a ceramic and a polymer.

The organic-inorganic hybrid coating layer may be porous.

The porous base may be a polyolefin-based porous base.

In a second aspect of the present invention is provided a lithium battery including a positive electrode, a negative electrode, and the separator described above disposed between the positive electrode and the negative electrode.

In a third aspect of the present invention is provided a method of manufacturing a separator including forming an organic-inorganic hybrid coating layer on at least one surface of a porous base, and forming a pattern coating layer on a surface of the organic-inorganic hybrid coating layer using a Micro Gravure coating method. The pattern coating layer includes patterns having an average diameter of 0.1 mm or less that are arranged to be regularly spaced apart from each other at an interval having a value in the range of 5 $\mu$m to 50 $\mu$m.

In a fourth aspect of the present invention is provided a method of manufacturing a lithium battery, including fabricating an electrode assembly including a positive electrode, a negative electrode, and the separator described above disposed between the positive electrode and the negative electrode, fabricating an integrated electrode assembly by stacking or winding the electrode assembly and heat-pressing the stacked or wound electrode assembly, and injecting an electrolyte into the integrated electrode assembly.

The heat-pressing may be performed at a temperature of about 90°C to about 120°C.

BRIEF DESCRIPTION OF THE DRAWINGS

Features will become apparent to those of skill in the art by describing in detail embodiments of the present invention with reference to the attached drawings in which:

FIG. 1 illustrates a schematic view depicting a surface of a separator according to an embodiment;
FIG. 2 illustrates a scanning electron microscope (SEM) image of a surface of a separator manufactured according to Example 1;
FIG. 3 illustrates a laser scanning microscope (LSM) image of a surface of a separator manufactured according to Comparative Example 1 magnified by 100 times;
FIG. 4 illustrates an SEM image of a surface of a separator manufactured according to Comparative Example 2;
FIG. 5 illustrates an exploded perspective view depicting a structure of a lithium secondary battery according to an embodiment;
FIG. 6A illustrates an image of a lithium battery manufactured according to Example 2;
FIG. 6B illustrates an image of a lithium battery manufactured according to Comparative Example 3; and
FIG. 7 illustrates a graph showing lifespan characteristics of the lithium batteries of Example 2 and Comparative Example 3.

DETAILED DESCRIPTION

Embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey embodiments of the present invention to those skilled in the art.

In the figures of the drawings, the dimensions of layers and regions may be exaggerated for clarity of illustration. Like reference numerals designate like elements throughout the specification.

Hereinafter, a separator according to an embodiment, a lithium battery including the same, a method of manufacturing the separator, and a method of manufacturing the lithium battery will be described in detail.

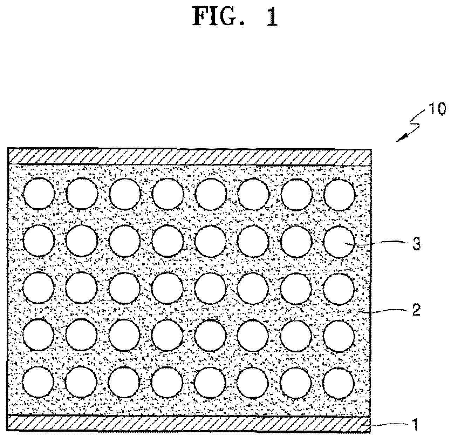

Referring to FIG. 1, a separator 10 according to an embodiment includes an organic-inorganic hybrid coating layer 2 disposed on at least one surface of a porous base 1 and a pattern coating layer 3 disposed on a surface of the organic-inorganic hybrid coating layer 2. The pattern coating layer 3 has patterns having an average diameter of 0.1 mm or less regularly separated from each other. Each pattern acts as a coating region on the porous base 1. By regularly separated from each other, it is meant that there is a comparable interval (*i.e.* distance) between each of the patterns across the surface of the organic-inorganic hybrid coating layer. For example, the interval between each of the patterns may be exactly the same or it may be substantially the same. Independently, the patterns are regularly separated (*i.e.* spaced apart) from each other at an interval having a value in the range of $5\mu m$ to $50\mu m$, for example, $10\mu m$ to $50\mu m$, $10\mu m$ to $30\mu m$, or $10\mu m$ to $20\mu m$ (*e.g.* about $15\mu m$).

A separator that includes only an organic-inorganic hybrid coating layer on a surface of a porous base may have a weak adhesive strength for an electrode, and thus, may easily separate from the electrode in a process of manufacturing a battery cell.

The separator 10 according to embodiments has the pattern coating layer 3 on the surface of the organic-inorganic hybrid coating layer, the pattern coating layer 3 having patterns having an average diameter of 0.1 mm or less arranged to be regularly spaced apart from each other. The separator 10 may have much higher adhesive strength for an electrode than a separator with patterns having the same diameter or an average diameter of 0.1 mm or greater per same area, arranged to be irregularly spaced apart from each other. The average diameter may be the diameter of a circular shape (*i.e.* pattern), which has the same area as a non-circular (e.g. irregular) shape.

The pattern coating layer 3 may have a predetermined pattern. The pattern coating layer 3 may be configured such that patterns having an average diameter of 0.0001 mm to 0.1 mm, for example, 0.001 mm to 0.1 mm, are regularly spaced apart from each other.

When the average diameter of the patterns is within the above-described ranges, a larger number of patterns having a smaller average diameter may be included on the surface of the organic-inorganic hybrid coating layer and thus both adhesion between inorganic particles included in the organic-inorganic hybrid coating layer and adhesion between the separator 10 and the electrode may be enhanced.

A total area of the pattern coating layer 3 is between about 30% and about 50%, based on a total area of the separator 10. When the total area of the pattern coating layer 3 is within the above-described range, the separator 10 may be easily impregnated in an electrolyte and adhesion between the separator 10 and the electrode may be further enhanced. The total area of the separator 10 is the area of the face of the separator on which the pattern coating layer is disposed.

The pattern coating layer 3 may be configured such that dot patterns are regularly spaced apart from each other. Any suitable types of patterns that form dot patterns may be used. For example, the dot patterns may have a circular, triangle, tetragonal, rectangular, rhombus, oval, or sectoral shape. A sum of the areas of each of the dots constitutes the total area of the pattern coating layer 3.

The patterns of the pattern coating layer 3 may have a water-base dispersion-type polymer structure. The patterns of the pattern coating layer 3 may include at least one polymer structure selected from among polyethylene, polypropylene, ethylene propylene copolymer, polyvinyl chloride, polyvinylidene chloride, polyvinylidene fluoride, polystyrene, polyacrylonitrile, polytetrafluoroethylene, polymethacrylate, polymethyl methacrylate, polyvinyl acetate, polyisoprene, polychloroprene, polyester, polycarbonate, polyamide, polyacrylate, polyurethane, polyethylene oxide, acrylonitrile-butadiene-styrene copolymer, polyoxyethylene, polyoxymethylene, polyoxypropylene, styrene-acrylonitrile copolymer, acrylonitrile-styrene-acrylate copolymer, styrene-butadiene copolymer, acrylated styrene-butadiene copolymer, acrylonitrile-butadiene copolymer, acryl rubber, butyl rubber, fluorine rubber, phenol resin, epoxy resin, polyvinylpyrrolidone, polyepichlorohydrin, polyphosphazene, ethylene-propylene-diene copolymer, polyvinylpyridine, chloro-sulfonated polyethylene, polysulfone, polyvinylalcohol, thermoplastic polyester rubber (PTEE), carboxymethylcellulose, hydroxypropylmethylcellulose, hydroxypropylcellulose, and diacetylcellulose.

Examples of polymerizable monomers used for obtaining the polymer structures include, for example, ethylenically unsaturated carboxylic acid alkyl ester such as methyl methacrylate, butyl methacrylate, ethyl methacrylate, and 2-ethylhexyl (meth)acrylic acid; cyano group-containing ethylenically unsaturated monomers such as acrylonitrile, methacrylonitrile, fumaronitrile, $\alpha$-chloroacrylonitrile, and $\alpha$-cyanoethylacrylonitrile; conjugated diene monomers such as 1,3-butadiene, isoprene, 2,3-dimethyl-1,3-butadiene, 2-ethyl-1,3-butadiene, 1,3-pentadiene, and chloroprene; ethylenically unsaturated carboxylic acids such as acrylic acid, methacrylic acid, maleic acid, fumaric acid, and citraconic acid and salts thereof; aromatic vinyl monomers such as styrene, alkyl styrene, and vinyl naphthalene; fluoroalkylvinylethers such as fluoroethylvinylether; vinyl pyridine; nonconjugated diene monomers such as vinyl norbornene, dicyclopentadiene, and 1,4-hexadiene; $\alpha$-olefins such as ethylene and propylene; ethylenically unsaturated amide monomers such as (meth)acrylamide; and sulfonic acid-based unsaturated monomers such as acryl amide methyl propane sulfonic acid and styrene sulfonic acid.

The patterns arranged in the pattern coating layer 3 are adhesive polymer particles and enhance adhesion between the separator 10 and the electrode while not reducing the ability to transfer lithium ions of the organic-inorganic hybrid coating layer.

The organic-inorganic hybrid coating layer 2 may include a ceramic and a polymer. The ceramic may be, for example, $\alpha$-alumina ($\alpha$-$Al_2O_3$), $\gamma$-alumina ($\gamma$-$Al_2O_3$), boehmite ($\gamma$-AlO(OH)), gibbsite ($\gamma$-Al(OH)$_3$), $BaTiO_3$, Pb(Zr,Ti)O$_3$ (PZT), $Pb_{1-x}LaZr_{1-y}Ti_yO_3$ (PLZT) where 0 < x < 1, 0 < y < 1, Pb(Mg$_{1/3}$Nb$_{2/3}$)O$_3$-PbTiO$_3$ (PMN-PT), $HfO_2$, $SrTiO_3$, $TiO_2$, SiC, $SnO_2$, $CeO_2$, or a mixture thereof. In addition, the ceramic may further include a lithium ion conductive ceramic. The lithium ion conductive ceramic may be, for example, lithium phosphate (Li$_3$PO$_4$), lithium titanium phosphate (Li$_x$Ti$_y$(PO$_4$)$_3$ where 0 < x < 2 and 0 < y < 3), lithium aluminum titanium phosphate (Li$_x$Al$_y$Ti$_z$(PO$_4$)$_3$ where 0 < x < 2, 0 < y < 1, and 0 < z < 3), lithium aluminum titanium phosphate doped with zirconium, hafnium, or rutherfordium (Li$_{1+x}$Al$_x$Ti$_{2-x}$M$_\alpha$(PO$_{4+\beta}$)$_3$ where 0 < x < 0.5, 0≤$\alpha$≤0.1, and 0≤$\beta$≤0.1, and M is Zr, Hf, or Rf), silicon-doped lithium aluminum titanium phosphate (Li$_{1+x+y}$Al$_x$Ti$_{2-x}$Si$_y$P$_{3-y}$O$_{12}$ where 0 ≤ x ≤ 1 and 0 ≤ y ≤ 1), or a mixture thereof.

Any suitable polymer that forms an organic-inorganic hybrid coating layer together with the ceramic may be used. Examples of the polymer include, for example, acrylate-based polymers such as polymethacrylate and polymethylmethacrylate; nitrile-based polymers such as polyacrylonitrile; polyvinylacetate; cellulose acetate; and polyimide. These polymers may be used alone or at least two of these polymers may be used in combination.

The organic-inorganic hybrid coating layer 2 may be porous. A weight ratio of ceramic to polymer included in the organic-inorganic hybrid coating layer 2 may be, for example, 99.99:0.01 to 99:1. When the weight ratio of ceramic to polymer included in the organic-inorganic hybrid coating layer 2 is within the above-described ranges, pores with appropriate size may be kept between ceramic particles of the organic-inorganic hybrid coating layer. Transfer of lithium ions may not be deteriorated and adhesion between the ceramic particles may be maintained.

The porous base 1 may be a polyolefin-based porous base. The porous base 1 may be, for example, a membranous or fibrous base formed using polyethylene, polypropylene, or a mixture thereof.

The porous base 1 may be formed as a mixed multilayer, for example, as a polyethylene/polypropylene layer, a polyethylene/polypropylene/polyethylene layer, or a polypropylene/polyethylene/polypropylene layer.

According to another embodiment, a lithium battery includes a positive electrode; a negative electrode; and a separator disposed between the positive and negative electrodes.

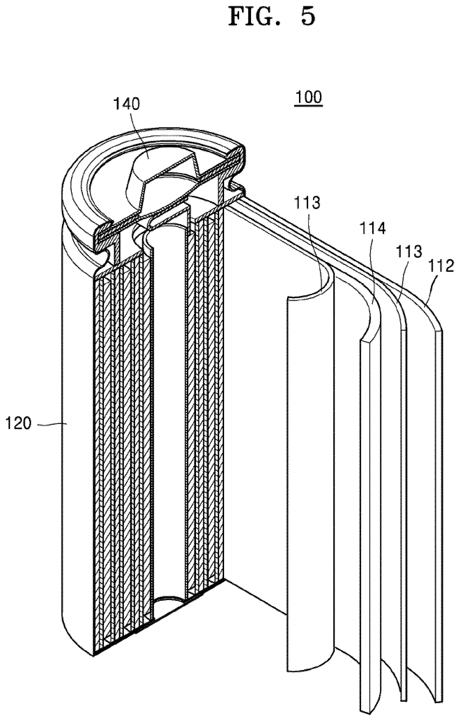

FIG. 5 is an exploded perspective view illustrating a structure of a lithium secondary battery 100 according to an embodiment.

Although FIG. 5 illustrates the lithium secondary battery as having a cylindrical shape, in other embodiments, the lithium secondary battery may be a rectangular type, a pouch type or other types.

Among lithium batteries, lithium secondary batteries may be classified as lithium ion batteries, lithium ion polymer batteries, and lithium polymer batteries, according to types of a separator and an electrolyte. Lithium secondary batteries may be classified as a cylindrical type, a rectangular type, a coin type, a pouch type, and the like, according to shapes thereof. Lithium secondary batteries may also be classified as a bulk-type and a thin film-type, according to sizes thereof. Herein, any suitable shape of the lithium secondary battery may be used.

In further detail, referring to FIG. 5, the lithium secondary battery 100 is of a cylindrical type and includes a negative electrode 112, a positive electrode 114, a separator 113 disposed between the negative and positive electrodes 112 and 114, an electrolyte (not shown) impregnated in the negative electrode 112, the positive electrode 114, and the separator 113, a battery case 120, and a sealing member 140 for sealing the battery case 120. The lithium secondary battery 100 may be configured such that the negative electrode 112, the separator 113, and the positive electrode 114 are sequentially stacked and then wound in a spiral form. The wound structure may be accommodated in the battery case 120. The separator 113 may be the same as the separator 10 according to embodiments as described above.

The negative electrode 112 may include a current collector and a negative active material layer formed on the current collector.

The current collector of the negative electrode 112 may be a Cu current collector, for example. In other embodiments, the current collector may be formed of stainless steel, aluminum, nickel, titanium, heat-treated carbon, copper or stainless steel that is surface-treated with carbon, nickel, titanium, or silver, or an Al-Cd alloy. The current collector of the negative electrode 112 may have fine unevenness at its surface so as to increase adhesion between the current collector and a negative active material. The current collector of the negative electrode 112 may be used in any suitable form including films, sheets, foils, nets, porous structures, foams, or non-woven fabrics.

The negative active material for forming the negative active material layer may be any suitable negative active material. Examples of the negative active material include lithium metal, a metal alloyable with lithium, a transition metal oxide, a material for doping or undoping lithium, and a material for reversibly intercalating or deintercalating lithium ions.

Examples of the transition metal oxide include tungsten oxide, molybdenum oxide, titanium oxide, lithium titanium oxide, vanadium oxide, and lithium vanadium oxide.

Examples of the material for doping or undoping lithium include Si; $SiO_x$ where $0<x\leq2$; Si-Y alloy where Y is an alkali metal, an alkali earth metal, a Group XIII element, a Group XIV element, a Group XV element, a Group XVI element, a transition metal, a rare-earth element, or a combination thereof and is not Si; Sn; $SnO_2$; and Sn-Y where Y is an alkali metal, an alkali earth metal, a Group XIII element, a Group XIV element, a Group XV element, a Group XVI element, a transition metal, a rare-earth element, or a combination thereof and is not Sn. In addition, at least one of the materials for doping or undoping lithium may be used in combination with $SiO_2$. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or a combination thereof.

The material for reversibly intercalating or deintercalating lithium ions may be any suitable carbonaceous negative active material for a lithium battery. Examples of the material for reversibly intercalating or deintercalating lithium ions include crystalline carbon, amorphous carbon, and combinations thereof. Examples of the crystalline carbon include natural graphite and artificial graphite, each of which has an amorphous shape, a plate shape, a flake shape, a spherical shape, or a fiber shape. Examples of the amorphous carbon include soft carbon (low-temperature calcined carbon), hard carbon, meso-phase pitch carbide, and calcined coke.

The negative active material layer may also include a binder and a conductive agent.

The binder may allow negative active material particles to adhere to each other and to the current collector. Examples of the binder include polyvinylalcohol, carboxymethylcellulose, hydroxypropylcellulose, diacetylcellulose, polyvinylchloride, carboxylated polyvinylchloride, polyvinylfluoride, ethylene oxide-containing polymers, polyvinylpyrrolidone, polyurethane, polytetrafluoroethylene, polyvinylidene fluoride, polyethylene, polypropylene, styrene-butadiene rubber, acrylated styrene-butadiene rubber, epoxy resins, and nylon.

The conductive agent may be used to impart conductivity to an electrode. Any suitable conductive agent may be used so long as it does not cause chemical changes in the fabricated battery and is a material with electronic conductivity. Examples of the conductive agent include natural graphite, artificial graphite, carbon black, acetylene black, Ketjen black, carbon fiber, metallic powders such as Cu powder, Ni powder, Al powder, and Ag powder, and metallic fibers. In addition, conductive materials such as polyphenylene derivatives or the like may be used alone or at least two thereof may be used in combination.

Amounts of the negative active material, the binder, and the conductive agent may be included at the same levels as used in a general lithium battery. For example, a weight ratio of the negative active material to a mixture of the conductive agent and the binder may be between about 98:2 and about 92:8, and a mix ratio of the conductive agent to the binder may be between about 1:1 to about 3:1.

The positive electrode 114 may include a current collector and a positive active material layer formed on the current collector.

The current collector may be an Al current collector, for example. In addition, as in the current collector of the negative electrode 112, the current collector of the positive electrode 114 may have a fine unevenness at its surface so as to increase adhesion between the current collector and a positive active material. The current collector of the positive electrode 114 may be used in any suitable form including in the form of a film, sheet, foil, net, porous structure, foam, or non-woven fabric.

As the positive active material, any suitable positive active material may be used. For example, a compound for reversibly intercalating or deintercalating lithium may be used. According to some embodiments, at least one of composite oxides of lithium and a metal selected from cobalt, manganese, nickel, and combinations thereof may be used. Examples thereof may include compounds represented by any one of $Li_aA_{1-b}B1_bD_2$ where $0.90 \leq a \leq 1.8$ and $0 \leq b \leq 0.5$; $Li_aE_{1-b}B1_bO_{2-c}D_c$ where $0.90 \leq a \leq 1.8$, $0 \leq b \leq 0.5$, and $0 \leq c \leq 0.05$; $LiE_{2-b}B1_bO_{4-c}D_c$ where $0 \leq b \leq 0.5$ and $0 \leq c \leq 0.05$; $Li_aNi_{1-b-c}Co_bB1_cD_\alpha$ where $0.90 \leq a \leq 1.8$, $0 \leq b \leq 0.5$, $0 \leq c \leq 0.05$, and $0 < \alpha \leq 2$; $Li_aNi_{1-b-c}Co_bB1_cO_{2-\alpha}F1_\alpha$ where $0.90 \leq a \leq 1.8$, $0 \leq b \leq 0.5$, $0 \leq c \leq 0.05$, and $0 < \alpha < 2$; $Li_aNi_{1-b-c}Co_bB1_cO_{2-\alpha}F1_2$ where $0.90 \leq a \leq 1.8$, $0 \leq b \leq 0.5$, $0 \leq c \leq 0.05$, and $0 < \alpha < 2$; $Li_aNi_{1-b-c}Mn_bB1_cD_a$ where $0.90 \leq a \leq 1.8$, $0 \leq b \leq 0.5$, $0 \leq c \leq 0.05$, and $0 < \alpha \leq 2$; $Li_aNi_{1-b-c}Mn_bB1_cO_{2-\alpha}F1_\alpha$ where $0.90 \leq a \leq 1.8$, $0 \leq b \leq 0.5$, $0 \leq c \leq 0.05$, and $0 < \alpha < 2$; $Li_aNi_{1-b-c}Mn_bB1_cO_{2-\alpha}F1_2$ where $0.90 \leq a \leq 1.8$, $0 \leq b \leq 0.5$, $0 \leq c \leq 0.05$, and $0 < \alpha < 2$; $Li_aNi_bE_cG_dO_2$ where $0.90 \leq a \leq 1.8$, $0 \leq b \leq 0.9$, $0 \leq c \leq 0.5$, and $0.001 \leq d \leq 0.1$; $Li_aNi_bCo_cMn_dG_eO_2$ where $0.90 \leq a \leq 1.8$, $0 \leq b \leq 0.9$, $0 \leq c \leq 0.5$, $0 \leq d \leq 0.5$, and $0.001 \leq e \leq 0.1$; $Li_aNiG_bO_2$ where $0.90 \leq a \leq 1.8$ and $0.001 \leq b \leq 0.1$; $Li_aCoG_bO_2$ where $0.90 \leq a \leq 1.8$ and $0.001 \leq b \leq 0.1$; $Li_aMnG_bO_2$ where $0.90 \leq a \leq 1.8$ and $0.001 \leq b \leq 0.1$; $Li_aMn_2G_bO_4$ where $0.90 \leq a \leq 1.8$ and $0.001 \leq b \leq 0.1$; $LiQO_2$; $LiQS_2$; $LiV_2O_5$; $LiZO_2$; $LiNiVO_4$; $Li_{(3-f)}J_2(PO_4)_3$ where $0 \leq f \leq 2$; $Li_{(3-f)}Fe_2(PO_4)_3$ where $0 \leq f \leq 2$; and $LiFePO_4$.

For example, the positive active material may be $LiMn_2O_4$, $LiNi_2O_4$, $LiCoO_2$, $LiNiO_2$, $LiMnO_2$, $Li_2MnO_3$, $LiFePO_4$, $LiNi_xCo_yO_2$ where $0<x \leq 0.15$ and $0<y \leq 0.85$, or the like.

In the formulae above, A is Ni, Co, Mn, or a combination thereof; B1 is Al, Ni, Co, Mn, Cr, Fe, Mg, Sr, V, a rare-earth element, or a combination thereof; D is O, F, S, P, or a combination thereof; E is Co, Mn, or a combination thereof; F1 is F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and J is V, Cr, Mn, Co, Ni, Cu, or a combination thereof.

Also, these compounds may have a coating layer on their surfaces, or these compounds may be mixed with a compound having a coating layer. The coating layer may include a coating element compound, such as an oxide or hydroxide of the coating element, an oxyhydroxide of the coating element, oxycarbonate of the coating element, or a hydroxycarbonate of the coating element. These compounds constituting the coating layers may be amorphous or crystalline. As the coating element included in the coating layer, Mg, Al, Co, K, Na, Ca, Si, Ti, V, Sn, Ge, Ga, B, As, Zr, or a mixture thereof may be used. A process for forming the coating layer may be any one of various coating methods (for example, spray coating, immersion, or the like) that use these compounds and these elements and do not adversely affect physical properties of the positive active material.

The positive active material layer may also include a binder and a conductive agent.

The binder may allow positive active material particles to adhere to each other and to the current collector. Examples of the binder include polyvinylalcohol, carboxymethylcellulose, hydroxypropylcellulose, diacetylcellulose, polyvinylchloride, carboxylated polyvinylchloride, polyvinylfluoride, ethylene oxide-containing polymers, polyvinylpyrrolidone, polyurethane, polytetrafluoroethylene, polyvinylidene fluoride, polyethylene, polypropylene, styrene-butadiene rubber, acrylated styrene-butadiene rubber, epoxy resins, and nylon.

The conductive agent is used to impart conductivity to an electrode. Any suitable conductive agent may be used so long as it does not cause chemical changes in the fabricated battery and is a material with electronic conductivity. Examples of the conductive agent include natural graphite, artificial graphite, carbon black, acetylene black, Ketjen black, carbon fiber, metallic powders such as Cu powder, Ni powder, Al powder, and Ag powder, and metallic fibers. In addition, conductive materials such as polyphenylene derivatives or the like may be used alone or at least two thereof may be used in combination.

In this regard, amounts of the positive active material, the binder, and the conductive agent may be included at the same levels as used in a general lithium battery. For example, a weight ratio of the positive active material to a mixture of the conductive agent and the binder may be between about 98:2 and about 92:8, and a mix ratio of the conductive agent to the binder may be between about 1:1 to about 3:1, but embodiments are not limited thereto.

The negative electrode 112 and the positive electrode 114 may be fabricated by preparing an active material composition through mixing of an active material, a binder, and a conductive material in a solvent and coating the active material composition on a current collector. The solvent may be N-methylpyrrolidone or the like, but embodiments are not limited thereto. The amount of the solvent may be about 1 part by weight to about 10 parts by weight based on 100 parts by weight of the negative active material or 100 parts by weight of the positive active material.

The lithium secondary battery 100 may include the separator 113 disposed between the positive electrode 114 and the negative electrode 112. The separator 113 may be the same as the separator 10 described above and illustrated in FIG. 1. For example, the separator 113 may have the same form and composition as the separator 10, and the components thereof will be described with reference to FIG. 1. The separator 113 may be in a form of a coating layer including: an organic-inorganic hybrid coating layer 2 disposed on at least one surface of a porous base 1 and a pattern coating layer 3 disposed on a surface of the organic-inorganic hybrid coating layer 2, wherein the pattern coating layer 3 has patterns having an average diameter of 0.1 mm or less regularly separated from each other. The pattern coating layer 3 may be a coating layer in which patterns having an average diameter of about 0.0001 mm to 0.1 mm are regularly separated from each other.

The separator 113 may include the pattern coating layer 3 having patterns having an average diameter of 0.1 mm or less regularly separated from each other, and thus, may have much higher adhesive strength for an electrode than that of a separator in which a plurality of particles having the same diameter or an average diameter of 0.1 mm or greater per same area is arranged to be irregularly spaced apart from each other.

In the separator 113, a ratio of a total area of the pattern coating layer 3 to a total area of the separator 113 is between about 30 and about 50%. When the ratio of a total area of the pattern coating layer 3 to a total area of the separator 113 is within the above-described range, the separator 113 may be easily impregnated in an electrolyte and adhesion between the separator 113 and an electrode may be further enhanced.

The lithium secondary battery 100 including the separator 113 may retain capacity regardless of type thereof, swelling may be suppressed when the separator 113 is impregnated in the electrolyte, and deformation of the separator 113 may not occur in a process of manufacturing a battery cell, which may result in enhanced lifespan characteristics.

According to another embodiment, a method of fabricating a separator 113 (or the separator 10 illustrated in FIG. 1) includes forming an organic-inorganic hybrid coating layer 2 on at least one surface of a porous base; and forming a pattern coating layer on a surface of the organic-inorganic hybrid coating layer 2 using a Micro Gravure method, wherein the pattern coating layer 3 is a coating layer in which patterns having an average diameter of 0.1 mm or less are regularly spaced apart from each other.

First, the porous base 1 may be prepared. As the porous base 1, a membranous or fibrous base formed using polyethylene, polypropylene, or a mixture thereof is prepared.

Next, the organic-inorganic hybrid coating layer 2 may be formed on at least one surface of the porous base.

The organic-inorganic hybrid coating layer 2 may be formed by coating a surface of the porous base with a solution prepared by mixing a ceramic with water, uniformly dispersing the resulting solution, adding the above-described polymer, e.g., acrylic acid ester-based polymer particles, to the aqueous dispersion, and uniformly dispersing the resulting dispersion and drying the coated porous base.

The acrylic acid ester-based polymer may be prepared by polymerization of an ethylenically unsaturated carboxylic acid ester and other monomers copolymerizable with the ethylenically unsaturated carboxylic acid ester. The term "polymerization" used herein is interpreted to include crosslinking reaction.

Any suitable ethylenically unsaturated carboxylic acid esters may be used. Examples of the ethylenically unsaturated carboxylic acid ester include: alkyl esters or substituted alkyl esters of acrylic acid such as methyl acrylate, ethyl acrylate, propyl acrylate, isopropyl acrylate, n-butyl acrylate, isobutyl acrylate, n-amyl acrylate, isoamyl acrylate, n-hexyl acrylate, 2-ethylhexyl acrylate, isobornyl acrylate, hydroxypropyl acrylate, and lauryl acrylate; alkyl esters or substituted alkyl esters of methacrylic acid such as methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, hydroxypropyl methacrylate, and lauryl methacrylate; alkyl esters or substituted alkyl esters of crotonic acid such as methyl crotonate, ethyl crotonate, propyl crotonate, butyl crotonate, isobutyl crotonate, n-amyl crotonate, isoamyl crotonate, n-hexyl crotonate, 2-ethylhexyl crotonate, and hydroxypropyl crotonate; amino group-containing methacrylic acid ester such as methacrylic acid dimethyl amino ethyl and methacrylic acid diethyl amino ethyl; alkoxy group-containing methacrylic acid esters such as methoxy polyethylene glycol monomethacrylic acid ester; and monoesters of unsaturated dicarboxylic acids such as monooctyl maleate, monobutyl maleate, and monooctyl itaconate,

Any suitable monomers copolymerizable with the ethylenically unsaturated carboxylic acid ester may be used. Examples of the monomers copolymerizable with the ethylenically unsaturated carboxylic acid ester include unsaturated carboxylic acids such as acrylic acid, methacrylic acid, itaconic acid, fumaric acid, or the like; carboxylic acid esters having at least two carbon-carbon double bonds such as diethylene glycol dimethacrylate, trimethylolpropane triacrylate, or the like; styrenic monomers such as styrene, chlorostyrene, vinyltoluene, t-butylstyrene, vinyl benzoate, vinyl methyl benzoate, vinyl naphthalene, chloromethylstyrene, hydroxymethylstyrene, $\alpha$-methylstyrene, divinylbenzene, and the like; amide-based monomers such as acrylamide, N-methylol acrylamide, acrylamide-2-methyl propane sulfonate, or the like; $\alpha,\beta$-unsaturated nitrile compounds such as acrylonitrile, methacrylonitrile, and the like; olefins such as ethylene, propylene, or the like; diene-based monomers such as butadiene, isoprene, and the like; halogen atom-containing monomers such as vinyl chloride, vinylidene chloride, or the like; vinyl esters such as vinyl acetate, vinyl propionate, vinyl butyrate, vinyl benzoate, or the like; vinyl ethers such as allyl glycidyl ether, methyl vinyl ether, ethyl vinyl ether, butyl vinyl ether, and the like; vinyl ketones such as methyl vinyl ketone, ethyl vinyl ketone, butyl vinyl ketone, hexyl vinyl ketone, isopropenyl vinyl ketone, or the like; and heterocycle-containing vinyl compounds such as N-vinylpyrrolidone, vinylpyridine, vinylimidazole, or the like.

Among these monomers, at least one material selected from the group of carboxylic acid esters having at least two carbon-carbon double bonds, amide-based monomers, α,β-unsaturated nitrile compounds, and vinyl ethers may be used.

A mix ratio of ethylenically unsaturated carboxylic acid ester to monomer copolymerizable with the ethylenically unsaturated carboxylic acid ester may be about 0.1:99.9 to about 99.9:0.1 on a molar ratio basis.

The acrylic acid ester-based polymer may be, for example, a water-based emulsion. The water-based emulsion represents a state in which polymer particles are dispersed and/or dissolved in water. The acrylic acid ester-based polymer may have a weight average molecular weight of about 1,000,000 to about 1,500,000.

The acrylic acid ester-based polymer in a water-based emulsion state may be used alone or in combination with a solvent. In this regard, the solvent may be water, acetone, tetrahydrofuran, methylenechloride, chloroform, dimethylformamide, N-methyl-2-pyrrolidone, cyclohexane, or a mixture thereof. The acrylic acid ester-based polymer may be prepared using various methods such as emulsion polymerization, solution polymerization, and the like, as examples. In this regard, the acrylic acid ester-based polymer may have a solid content concentration of, for example, about 1 wt% to about 25 wt%.

As the coating method, a suitable coating method, such as spray coating, dip coating, die coating, roll coating, Micro Gravure coating, or the like, may be used.

Subsequently, patterns having an average diameter of 0.1 mm or less may be formed so as to be regularly spaced apart from each other using a Micro Gravure method and maintained at room temperature for about 0.2 hours to about 4 hours to form the pattern coating layer 3.

As a solution used in the Micro Gravure method, for example, a coating solution, prepared by adding styrene-butadiene copolymer having a weight average molecular weight of about 1,000,000 to about 1,500,000 and a solvent in an appropriate ratio and dispersing the styrene-butadiene copolymer in the solvent by stirring at room temperature, may be used. The solvent of the coating solution may be water, acetone, tetrahydrofuran, methylenechloride, chloroform, dimethylformamide, N-methyl-2-pyrrolidone, cyclohexane, or a mixture thereof. The styrene-butadiene copolymer used in the coating solution may have a solid content concentration of, for example, about 1 wt% to about 25 wt%.

According to another embodiment a method of manufacturing a lithium battery includes fabricating an electrode assembly by interposing the above-described separator 113 (10) between positive and negative electrodes 114, 112; stacking or winding the electrode assembly and fabricating an integrated electrode assembly through heat pressing; and injecting an electrolyte into the electrode assembly.

The heat pressing may be performed at a temperature ranging from about 90°C to about 120°C, for example, about 100°C. When a battery case in which an electrode assembly is accommodated is heat-pressed at the above-described temperature range, adhesion between the separator and the electrode may be enhanced without deformation of a battery cell.

The following Examples and Comparative Examples are provided in order to highlight characteristics of one or more embodiments, but it is to be understood that the Examples and Comparative Examples are not to be construed as limiting the scope of the embodiments. Further, it is to be understood that the embodiments are not limited to the particular details described in the Examples and Comparative Examples.

[Examples]

Preparation Example 1: Preparation of Acrylic Acid Ester-based Polymer Emulsion

Air inside of a flask reactor equipped with a condenser, a thermostat, a monomer emulsion inlet tube, a nitrogen gas inlet tube, and a stirrer was replaced with nitrogen. 60 parts by weight of soft water and 1.5 parts by weight of dodecylbenzene sulfonic acid sodium salt were added to the flask reactor, and the temperature therein was raised to 70°C. Subsequently, 10% of a monomer emulsion consisting of 40 parts by weight of soft water, 0.5 parts by weight of dodecylbenzene sulfonic acid sodium salt, 30 parts by weight of 2-ethylhexylacrylate, 15 parts by weight of acrylonitrile, 50 parts by weight of isobornylacrylate, 1 part by weight of methacrylic acid, 1.5 parts by weight of acrylic acid, 1.5 parts by weight of hydroxyethylacrylate, and 1 part by weight of ethylenedimethacrylate was added to the flask reactor and stirred for 5 minutes, followed by adding 10 parts by weight of an 5% aqueous ammonium persulfate solution into the flask reactor to initiate a reaction therebetween. After 1 hour, the remaining monomer emulsion (*i.e.* 90%) was added dropwise to the flask reactor over 3 hours. 6 parts by weight of the 5% aqueous ammonium persulfate solution was added simultaneously dropwise for 3 hours. After the dropwise addition of the monomer emulsion was completed, the reaction was continued for a further 2 hours. A polymerization conversion ratio was 98.2%. Thereafter, the resulting solution was cooled to 20°C and the remaining monomer was removed under reduced pressure. The pH and solid content concentration were adjusted to pH 8 and 40 wt%, respectively, thereby obtaining a water-based acrylic acid ester-based polymer emulsion (average particle diameter: about 120 nm, weight average molecular weight: 1,000,000).

Example 1: Manufacture of Separator

A polyethylene porous base having a thickness of 12 $\mu$m (manufactured by Asahi) was prepared. Subsequently, $\alpha$-Al$_2$O$_3$ powder having an average particle diameter of 50 nm and the acrylic acid ester-based polymer emulsion prepared according to Preparation Example 1 were mixed in a weight ratio of 97:3 and distilled water was added thereto to prepare a dispersion in which the acrylic acid ester-based polymer has a solid content concentration of 10 wt%. The dispersion was coated on a surface of the polyethylene porous base using a Micro Gravure coater to form a layer having a thickness of 4 $\mu$m. The coating layer was dried by heat in an oven at 50°C for 4 hours to form an organic-inorganic hybrid coating layer on the surface of the polyethylene porous base.

Next, patterns having an average diameter of 50 $\mu$m were arranged on the surface of the organic-inorganic hybrid coating layer to be regularly spaced apart from each other at an interval of 15 $\mu$m, using a Micro Gravure method to form a pattern coating layer. Then, the pattern coating layer was dried at room temperature for 2 hours, thereby completing manufacture of a separator.

In the Micro Gravure method, a solution prepared by dispersing styrene-butadiene copolymer (manufactured by Xeon, weight average molecular weight: 1,000,000) in distilled water so as to have a solid content concentration of 10 wt% was used. A total area of the pattern coating layer was 46% based on a total area of the separator.

Comparative Example 1: Manufacture of Separator

A polyethylene porous base having a thickness of 12 $\mu$m (manufactured by Asahi) was prepared. Subsequently, $\alpha$-Al$_2$O$_3$ powder having an average particle diameter of 50 nm and the acrylic acid ester-based polymer emulsion of Preparation Example 1 were mixed in a weight ratio of 97:3 and distilled water was added thereto to prepare a dispersion in which the acrylic acid ester-based polymer had a solid content concentration of 10 wt%. The dispersion was coated on a surface of the polyethylene porous base using a Micro Gravure coater to form a layer having a thickness of 4 $\mu$m. The coating layer was dried by heat in an oven at 50°C for 4 hours to form an organic-inorganic hybrid coating layer on the surface of the polyethylene porous base.

Next, patterns having an average diameter of 220 $\mu$m were arranged on the surface of the organic-inorganic hybrid coating layer to be regularly spaced apart from each other at an interval of 200 $\mu$m, using a Micro Gravure method, to form a pattern coating layer. Then, the pattern coating layer was dried at room temperature for 2 hours, thereby completing manufacture of a separator.

In the Micro Gravure method, a solution prepared by dispersing a styrene-butadiene copolymer (manufactured by Xeon, weight average molecular weight: 1,000,000) in distilled water so as to have a solid content concentration of 10 wt% was used. A total area of the pattern coating layer was 27% based on a total area of the separator.

Comparative Example 2: Manufacture of Separator

A polyethylene porous base having a thickness of 12 $\mu$m (manufactured by Asahi) was prepared. Subsequently, $\alpha$-Al$_2$O$_3$ powder having an average particle diameter of 50 nm and the acrylic acid ester-based polymer emulsion of Preparation Example 1 were mixed in a weight ratio of 97:3 and distilled water was added thereto to prepare a dispersion in which the acrylic acid ester-based polymer has a solid content concentration of 10 wt%. The dispersion was coated on a surface of the polyethylene porous base using a Micro Gravure coater to form a layer having a thickness of 4 $\mu$m. The coating layer was dried by heat in an oven at 50°C for 4 hours to form an organic-inorganic hybrid coating layer on the surface of the polyethylene porous base.

Next, a solution was sprayed onto a surface of the organic-inorganic hybrid coating layer using an inkjet spraying method and dried at room temperature for 2 hours, thereby completing manufacture of a separator.

In the inkjet spraying method, a solution prepared by dispersing styrene-butadiene copolymer (manufactured by Xeon, weight average molecular weight: 1,000,000) in distilled water so as to have a solid content concentration of 10 wt% was used. The sprayed coating layer was configured such that a plurality of particles were arranged to be irregularly spaced apart from each other.

Example 2

2-1. Fabrication of Positive Electrode

A slurry was prepared by dispersing 97.2 parts by weight of LiCoO$_2$ powder, 1.5 parts by weight of polyvinylidenefluoride as a binder, and 1.3 parts by weight of carbon black as a conductive agent in N-methylpyrrolidone as a solvent. The slurry was coated onto an Al electrode base to a thickness of about 145 $\mu$m using a doctor blade (gap: 170 mm). The coated Al electrode base was heat treated at 100°C in a vacuum for 5.5 hours, dried, and rolled using a roll press to manufacture a positive electrode plate including a positive active material layer. Thereafter, the positive electrode plate was cut to a size of 457 mm (width) x 65.5 mm (height), thereby completing manufacture of a positive electrode having a belt shape.

2-2. Fabrication of Negative Electrode

A slurry was prepared by dispersing 98 parts by weight of graphite, 1 part by weight of styrene-butadiene rubber as a binder, and 1 part by weight of carboxymethylcellulose as a thickener in N-methylpyrrolidone as a solvent and mixing these together in an agate mortar. The slurry was coated onto an Al current collector to a thickness of about 140 $\mu$m using a doctor blade (gap: 160 mm). The coated Al current collector was heat treated in a vacuum oven at 145°C for 6.5 hours, dried, and rolled using a roll press to manufacture a negative electrode plate including a negative active material layer. Thereafter, the negative electrode plate was cut to a size of 448 mm (width) x 66.5 mm (height), thereby completing manufacture of a negative electrode having a belt shape.

2-3. Preparation of Separator

The separator manufactured according to Example 1 was prepared.

2-4. Manufacture of Lithium Battery

An electrode assembly was manufactured by interposing the separator of Example 1 between the positive electrode manufactured according to 2-1 above and the negative electrode manufactured according to 2-2 above. The electrode assembly was stacked and pressed under a temperature of about 110°C and a pressure of 250 kgf for 50 seconds using a heat press.

Subsequently, the electrode assembly was accommodated in a case, an electrolyte containing 1.13M LiPF$_6$ dissolved in ethylene carbonate (EC)+dimethyl carbonate (DMC)+diethyl carbonate (DEC) (a volume ratio of 3:5:2) was injected thereinto, followed by vacuum sealing, thereby completing manufacture of a lithium battery. The separator was arranged such that the pattern coating layer faced the negative electrode.

Comparative Example 3

A lithium battery was manufactured in the same manner as in Example 2, except that the separator manufactured according to Comparative Example 1 was used instead of the separator of Example 1.

Comparative Example 4

A lithium battery was manufactured in the same manner as in Example 2, except that the separator manufactured according to Comparative Example 2 was used instead of the separator of Example 1.

Evaluation Example 1: Scanning Electron Microscope (SEM) Evaluation

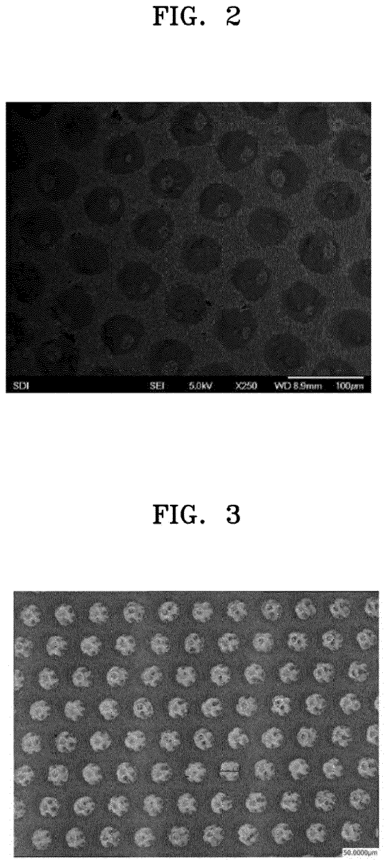

Surfaces of the separators of Example 1 and Comparative Example 2 were imaged using a scanning electron microscope (SEM). The surface of the separator of Comparative Example 1 was imaged using a laser scanning microscope (LSM). Results are shown in FIGS. 2 to 4.

Referring to FIG. 2, it can be confirmed that the pattern coating layer of the separator of Example 1 is arranged such that the patterns having an average diameter of 50 $\mu$m were regularly spaced apart from each other at an interval of 15 $\mu$m.

Referring to FIG. 3, it can be confirmed that the pattern coating layer of the separator of Comparative Example 1 is arranged such that the patterns having an average diameter of 220 $\mu$m were regularly spaced apart from each other at an interval of 200 $\mu$m.

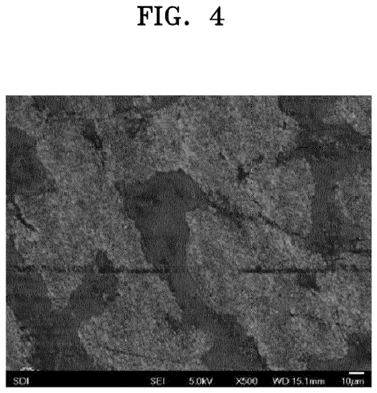

Referring to FIG. 4, it can be confirmed that particles of the sprayed coating layer of the separator of Comparative Example 2 were very irregularly arranged.

Evaluation Example 2: Evaluation of Adhesion between Separator and Electrode

Each of the separators of Example 1 and Comparative Examples 1 and 2 was stacked on the positive electrode, covered by release PET, and heat-pressed at 120°C for 50 seconds to adhere the separator to the positive electrode. Each separator adhered to the positive electrode was cut to a size of 20 mm (width) x 60 mm (length) and then a 180° peel test was performed thereon using a tensile strength tester (manufactured by INSTRON). To measure a peeling strength (gf/mm) of each of the separators of Example 1 and Comparative Examples 1 and 2 from the positive electrode plate, i.e., adhesion between the separator and the positive electrode, adhesion between the porous base and the positive electrode plate and adhesion between the organic-inorganic hybrid coating layer and the positive electrode plate were measured. Measurement results are shown in Table 1 below.

[Table 1]

|  | Adhesion between porous base and positive electrode plate (gf/mm) | Adhesion between organic-inorganic hybrid coating layer and positive electrode plate (gf/mm) |
|---|---|---|
| Example 1 | 1.838 | 0.250 |
| Comparative Example 1 | 0.523 | 0.010 |
| Comparative Example 2 | 0.232 | 0.008 |

Referring to Table 1 above, it can be confirmed that adhesion between the porous base of Example 1 and the positive electrode plate was 1.838 gf/mm, and adhesion between the porous base of Comparative Example 1 and the positive electrode plate and adhesion between the porous base of Comparative Example 2 and the positive electrode plate were 0.523 gf/mm and 0.232 gf/mm, respectively.

In addition, it can be confirmed that adhesion between the organic-inorganic hybrid coating layer of Example 1 and the positive electrode plate was 0.250gf/mm, and adhesion between the organic-inorganic hybrid coating layer of Comparative Example 1 and the positive electrode plate and adhesion between the organic-inorganic hybrid coating layer of Comparative Example 2 and the positive electrode plate were 0.010 gf/mm and 0.008 gf/mm, respectively.

From the results shown in Table 1, it can be confirmed that the adhesion between the separator of Example 1 and the positive electrode was higher than the adhesion between each of the separators of Comparative Examples 1 and 2 and the positive electrode.

Evaluation Example 3: Evaluation of Whether Lithium Battery is Deformed

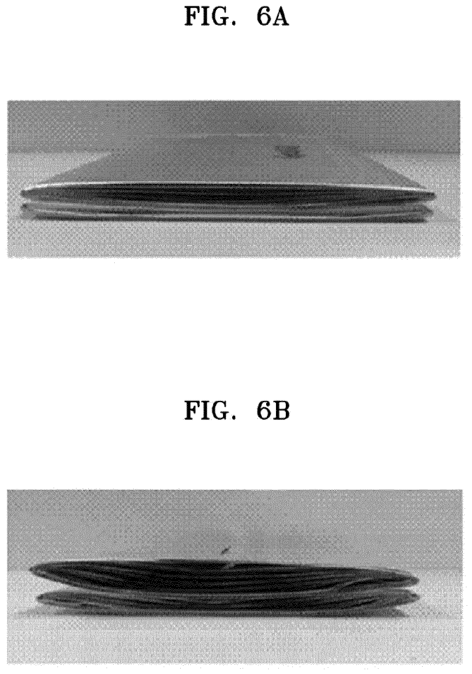

Whether the lithium batteries of Example 2 and Comparative Example 3 are deformed was observed using photographs. Results are shown in FIGS. 6A and 6B.

Referring to FIGS. 6A and 6B, it can be confirmed that the lithium battery of Example 2 was not deformed, while the lithium battery of Comparative Example 3 was deformed. Evaluation Example 4: Evaluation of Lifespan Characteristics

The lithium batteries of Example 2 and Comparative Example 3 manufactured respectively using the separators of Example 1 and Comparative Example 1 were constant-current charged at 25°C at a rate of 0.2 C until the voltage reached 4.2 V and charged at a constant voltage of 4.2 V until the current reached 0.01 C. Subsequently, each lithium battery was discharged at a constant current of 0.2 C until voltage reached 3.05 V (formation process).

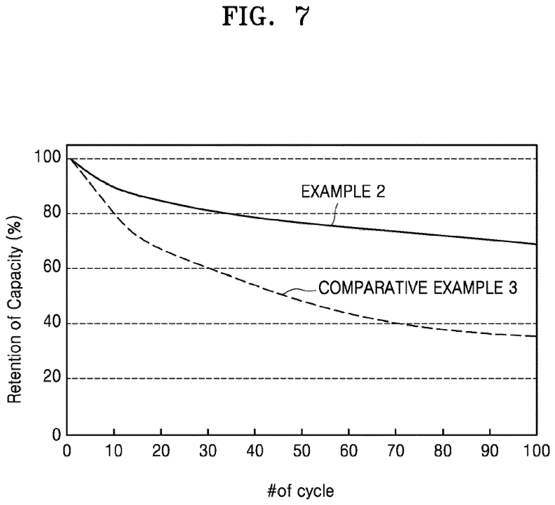

After formation process, each lithium battery was subjected to 100 cycles of charging and discharging. In this regard, charging was performed at 25°C at a constant current at a rate of 0.5 C until the voltage reached 4.2 V and performed at a constant voltage of 4.2 V until the current reached 0.01 C, and discharging was performed at a constant current of 0.5 C until voltage reached 3.0 V. Charge and discharge experimental results are shown in Table 2 below and FIG. 7. A capacity retention ratio was calculated using Equation 1 below.

<Equation 1>

$$\text{Capacity retention ratio (\%)} = [\text{discharge capacity at }100^{th}\text{ cycle/discharge capacity at }1^{st}\text{ cycle}] \times 100$$

[Table 2]

|  | Capacity retention ratio (%) |
|---|---|
| Example 2 | 70 |
| Comparative Example 3 | 38 |

Referring to Table 2 above and FIG. 7, the capacity retention ratio of the lithium battery of Example 2 was shown to be higher than that of the lithium battery of Comparative Example 3. From the results shown in Table 2, it can be confirmed that the lithium battery of Example 2 has enhanced lifespan characteristics when compared to the lithium battery of Comparative Example 3.

By way of summation and review, lithium batteries, e.g., lithium secondary batteries, have a structure in which a separator is disposed between a positive electrode and a negative electrode. A separator serves as a passage for lithium ions in a lithium battery and prevents a short circuit due to direct contact between a positive electrode and a negative electrode. A polyolefin-based porous base may be used as a separator. However, the polyolefin-based porous bases may show severe thermal contraction behaviors at a temperature of 100°C or greater due to material properties and characteristics of manufacturing processes, including stretching, and thus may incur short circuit between a positive electrode and a negative electrode.

A separator may be formed as a porous coating layer by coating at least one surface of a porous substrate having a plurality of pores with a mixture of inorganic particles and a binder polymer. However, such a porous coating layer includes inorganic particles and thus may reduce adhesion between an electrode and a separator. An electrode and a separator may not be closely adhered to each other and may be likely to separate from each other in a process of assembling a battery cell. Thus, lithium ions may not be effectively transferred. In addition, inorganic particles included in the porous coating layer may be deintercalated and thus a lithium battery including the porous coating layer may have deteriorated performance.

One or more embodiments include a separator with enhanced adhesive strength for an electrode. One or more embodiments include a lithium battery with enhanced lifespan characteristics. One or more embodiments include a method of manufacturing the separator with enhanced adhesive strength for an electrode. One or more embodiments include a method of manufacturing the lithium battery with enhanced lifespan characteristics.

As described above, according to the one or more of the above embodiments, a separator including an organic-inorganic hybrid coating layer disposed on at least one surface of a porous base and a pattern coating layer disposed on a surface of the organic-inorganic hybrid coating layer, wherein the pattern coating layer has patterns having an average diameter of 0.1 mm or less regularly separated from each other, and a lithium battery including the separator may have enhanced adhesive strength for an electrode and may provide enhanced lifespan characteristics.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope as set forth in the following claims.

## Claims

1.  A separator, comprising:

    an organic-inorganic hybrid coating layer on at least one surface of a porous base; and
    a pattern coating layer on a surface of the organic-inorganic hybrid coating layer, wherein the pattern coating layer includes patterns having an average diameter of 0.1 mm or less that are regularly spaced apart from each other at an interval having a value in the range of 5 $\mu$m to 50 $\mu$m, wherein a total area of the pattern coating layer is in a range of about 30% to about 50% based on a total area of the separator, wherein the patterns are adhesive polymer particles.

2.  A separator according to claim 1, wherein the pattern coating layer is configured as dot patterns that are regularly spaced apart from each other.

3.  A separator according to any one of claims 1 to 2, wherein the patterns of the pattern coating layer include a water-base dispersion-type polymer structure.

4. A separator according to any one of claims 1 to 3, wherein the patterns of the pattern coating layer include at least one polymer structure selected from polyethylene, polypropylene, ethylene propylene copolymer, polyvinyl chloride, polyvinylidene chloride, polyvinylidene fluoride, polystyrene, polyacrylonitrile, polytetrafluoroethylene, polymethacrylate, polymethyl methacrylate, polyvinyl acetate, polyisoprene, polychloroprene, polyester, polycarbonate, polyamide, polyacrylate, polyurethane, polyethylene oxide, acrylonitrile-butadiene-styrene copolymer, polyoxyethylene, polyoxymethylene, polyoxypropylene, styrene-acrylonitrile copolymer, acrylonitrile-styrene-acrylate copolymer, styrene-butadiene copolymer, acrylated styrene-butadiene copolymer, acrylonitrile-butadiene copolymer, acrylonitrile-butadiene-styrene copolymer, acryl rubber, butyl rubber, fluorine rubber, phenol resin, epoxy resin, polyvinylpyrrolidone, polyepichlorohydrin, polyphosphazene, ethylene-propylene-diene copolymer, polyvinylpyridine, chloro-sulfonated polyethylene, polysulfone, polyvinylalcohol, thermoplastic polyester rubber (PTEE), carboxymethylcellulose, hydroxypropylmethylcellulose, hydroxypropylcellulose, and diacetylcellulose.

5. A separator according to any one of claims 1 to 4, wherein the organic-inorganic hybrid coating layer includes a ceramic and a polymer.

6. A separator according to any one of claims 1 to 5, wherein the organic-inorganic hybrid coating layer is porous.

7. A separator according to any one of claims 1 to 6, wherein the porous base is a polyolefin-based porous base.

8. A lithium battery, comprising:

a positive electrode;
a negative electrode; and
a separator according to any one of claims 1 to 7 disposed between the positive electrode and the negative electrode.

9. A method of manufacturing the separator of claim 1, the method comprising:

forming an organic-inorganic hybrid coating layer on at least one surface of a porous base; and
forming a pattern coating layer on a surface of the organic-inorganic hybrid coating layer using a Micro Gravure coating method,
wherein the pattern coating layer includes patterns having an average diameter of 0.1 mm or less that are regularly spaced apart from each other at an interval having a value in the range of 5 $\mu$m to 50 $\mu$m.

10. A method of manufacturing a lithium battery, the method comprising:

fabricating an electrode assembly including a positive electrode, a negative electrode, and a separator according to any one of claims 1 to 7 disposed between the positive electrode and the negative electrode;
fabricating an integrated electrode assembly by stacking or winding the electrode assembly and heat-pressing the stacked or wound electrode assembly; and
injecting an electrolyte into the integrated electrode assembly, optionally wherein the heat-pressing is performed at a temperature of about 90°C to about 120°C.

**Patentansprüche**

1. Separator, Folgendes umfassend:

eine organisch-anorganische hybride Belagschicht auf mindestens einer Oberfläche einer porösen Basis; und
eine Muster-Belagschicht auf einer Oberfläche der organisch-anorganischen hybriden Belagschicht, worin die Muster-Belagschicht Muster mit einem mittleren Durchschnitt kleiner als oder gleich 0,1 mm aufweist, die regelmäßig mit einem Intervall voneinander angeordnet sind, das einen Wert im Bereich von 5 $\mu$m bis 50 $\mu$m hat, worin eine Gesamtfläche der Muster-Belagschicht in einem Bereich von ungefähr 30 % bis ungefähr 50 % liegt, auf einer Gesamtfläche des Separators basierend, worin die Muster haftfeste Polymerpartikel sind.

2. Separator nach Anspruch 1, worin die Muster-Belagschicht als Punkt-Muster konfiguriert ist, die regelmäßig mit Abstand voneinander angeordnet sind.

3. Separator nach einem der Ansprüche 1 bis 2, worin die Muster der Muster-Belagschicht eine wasserbasierte dispersionsartige Polymerstruktur enthalten.

4. Separator nach einem der Ansprüche 1 bis 3, worin die Muster der Muster-Belagschicht mindestens eine Polymerstruktur enthalten, die aus den Folgenden ausgewählt ist: Polyethylen, Polypropylen, Ethylenpropylencopolymer, Polyvinylchlorid, Polyvinylidenchlorid, Polyvinylidenfluorid, Polystyren, Polyacrylnitril, Polytetrafluorethylen, Polymethacrylat, Polymethylmethacrylat, Polyvinylacetat, Polyisopren, Polychloropren, Polyester, Polycarbonat, Polyamid, Polyacrylat, Polyurethan, Polyethylenoxid, Acrylonitrilbutadienstyrolcopolymer, Polyoxyethylen, Polyoxymethylen, Polyoxypropylen, Styrenacrylonitrilcopolymer, Acrylnitrilstyrenacrylatcopolymer, Styrenbutadien-Copolymer, Acrylatstyrenebutadien-Copolymer, Acrylonitrilbutadien-Copolymer, Acrylonitrilbutadienstyren-Copolymer, Acrylgummi, Butylgummi, Fluorgummi, Phenolharz, Epoxyharz, Polyvinylpyrrolidon, Polyepichlorohydrin, Polyphosphazen, Ethylene-Propylene-Dien Copolymer, Polyvinylpyridin, chlorsulfoniertes Polyethylen, Polysulfon, Polyvinylalkohol, Thermoplast-Polyestergummi (PTEE), Carboxymethylcellulose, Hydroxypropylmethylcellulose, Hydroxypropylcellulose und Diacetylcellulose.

5. Separator nach einem der Ansprüche 1 bis 4, worin die organisch-anorganische hybride Belagschicht einen keramischen Werkstoff oder ein Polymer enthält.

6. Separator nach einem der Ansprüche 1 bis 5, worin die organisch-anorganische hybride Belagschicht porös ist.

7. Separator nach einem der Ansprüche 1 bis 6, worin die poröse Basis eine polyolefin-basierte poröse Basis ist.

8. Lithiumbatterie, Folgendes umfassend:

   eine positive Elektrode;
   eine negative Elektrode; und
   einen Separator nach einem der Ansprüche 1 bis 7, zwischen der positiven Elektrode und der negativen Elektrode angeordnet.

9. Verfahren zum Herstellen des Separators nach Anspruch 1, wobei das Verfahren Folgendes umfasst:

   Formen einer organisch-anorganischen hybriden Belagschicht auf mindestens einer Oberfläche einer porösen Basis; und
   Formen einer Muster-Belagschicht auf einer Oberfläche der organisch-anorganischen hybriden Belagschicht unter Verwendung eines Mikrogravur-Beschichtungsverfahrens,
   worin die Muster-Belagschicht Muster mit einem mittleren Durchmesser kleiner als oder gleich 0,1 mm enthält, die mit regelmäßigem Abstand mit einem Intervall voneinander angeordnet sind, das einen Wert im Bereich von 5 μm bis 50 μm hat.

10. Verfahren zum Herstellen einer Lithiumbatterie, wobei das Verfahren Folgendes umfasst:

   Fertigen einer Elektrodenbaugruppe einschließend eine positive Elektrode, eine negative Elektrode und einen Separator nach einem der Ansprüche 1 bis 7, der zwischen der positiven Elektrode und der negativen Elektrode angeordnet ist;
   Fertigen einer integrierten Elektrodenbaugruppe durch Stapeln oder Wickeln der Elektrodenbaugruppe und Wärmepressen der gestapelten oder gewickelten Elektrodenbaugruppe; und
   Injizieren eines Elektrolyts in die integrierte Elektrodenbaugruppe, worin optional das Wärmepressen mit einer Temperatur von ungefähr 90 °C bis ungefähr 120 °C ausgeführt wird.

**Revendications**

1. Séparateur, comprenant :

   une couche de revêtement hybride organique-inorganique sur au moins une surface d'une base poreuse ; et
   une couche de revêtement à motifs sur une surface de la couche de revêtement hybride organique-inorganique, dans lequel la couche de revêtement à motifs inclut des motifs qui présentent un diamètre moyen de 0,1 mm ou moins et qui sont espacés les uns des autres de façon régulière selon un intervalle qui présente une valeur dans la plage qui va de 5 μm à 50 μm, dans lequel une aire totale de la couche de revêtement à motifs s'inscrit dans une plage qui va d'environ 30 % à environ 50 % sur la base d'une aire totale du séparateur, dans lequel les motifs sont des particules en polymère adhésives.

2. Séparateur selon la revendication 1, dans lequel la couche de revêtement à motifs est configurée en tant que motifs à points qui sont espacés les uns des autres de façon uniforme.

3. Séparateur selon l'une quelconque des revendications 1 à 2, dans lequel les motifs de la couche de revêtement à motifs incluent une structure en polymère du type à dispersion à base d'eau.

4. Séparateur selon l'une quelconque des revendications 1 à 3, dans lequel les motifs de la couche de revêtement à motifs incluent au moins une structure en polymère qui est sélectionnée parmi le polyéthylène, le polypropylène, un copolymère éthylène-propylène, le chlorure de polyvinyle, le chlorure de polyvinylidène, le fluorure de polyvinylidène, le polystyrène, le polyacrylonitrile, le polytétrafluoroéthylène, le polyméthacrylate, le méthacrylate de polyméthyle, l'acétate de polyvinyle, le polyisoprène, le polychloroprène, le polyester, le polycarbonate, le polyamide, le polyacrylate, le polyuréthane, l'oxyde de polyéthylène, un copolymère acrylonitrile-butadiène-styrène, le polyoxyéthylène, le polyoxyméthylène, le polyoxypropylène, un copolymère styrène-acrylonitrile, un copolymère acrylonitrile-styrène-acrylate, un copolymère styrène-butadiène, un copolymère styrène-butadiène acrylaté, un copolymère acrylonitrile-butadiène, un copolymère acrylonitrile-butadiène-styrène, un caoutchouc acrylique, un caoutchouc butylique, un caoutchouc fluoré, une résine phénol, une résine époxy, le polyvinylpyrrolidone, la polyépichlorohydrine, le polyphosphazène, un copolymère éthylène-propylène-diène, la polyvinylpyridine, le polyéthylène chlorosulfonaté, le polysulfone, l'alcool polyvinylique, un caoutchouc polyester thermoplastique (PTEE), la carboxyméthylcellulose, l'hydroxypropylméthylcellulose, l'hydroxypropylcellulose et la diacétylcellulose.

5. Séparateur selon l'une quelconque des revendications 1 à 4, dans lequel la couche de revêtement hybride organique-inorganique inclut une céramique et un polymère.

6. Séparateur selon l'une quelconque des revendications 1 à 5, dans lequel la couche de revêtement hybride organique-inorganique est poreuse.

7. Séparateur selon l'une quelconque des revendications 1 à 6, dans lequel la base poreuse est une base poreuse à base de polyoléfine.

8. Batterie au lithium, comprenant :

une électrode positive ;
une électrode négative ; et
un séparateur selon l'une quelconque des revendications 1 à 7 qui est disposé entre l'électrode positive et l'électrode négative.

9. Procédé de fabrication du séparateur selon la revendication 1, le procédé comprenant :

la formation d'une couche de revêtement hybride organique-inorganique sur au moins une surface d'une base poreuse ; et
la formation d'une couche de revêtement à motifs sur une surface de la couche de revêtement hybride organique-inorganique en utilisant un procédé de revêtement par microgravure ;
dans lequel la couche de revêtement à motifs inclut des motifs qui présentent un diamètre moyen de 0,1 mm ou moins et qui sont espacés les uns des autres de façon régulière selon un intervalle qui présente une valeur dans la plage qui va de 5 μm à 50 μm.

10. Procédé de fabrication d'une batterie au lithium, le procédé comprenant :

la fabrication d'un ensemble d'électrodes qui inclut une électrode positive, une électrode négative et un séparateur selon l'une quelconque des revendications 1 à 7 qui est disposé entre l'électrode positive et l'électrode négative ;
la fabrication d'un ensemble d'électrodes intégré en empilant ou en enroulant l'ensemble d'électrodes et en soumettant l'ensemble d'électrodes empilé ou enroulé à un thermopressage ; et
l'injection d'un électrolyte à l'intérieur de l'ensemble d'électrodes intégré, en option dans lequel le thermopressage est effectué à une température d'environ 90 °C à environ 120 °C.

FIG. 1

FIG. 2

FIG. 3

FIG. 4

FIG. 5

FIG. 6A

FIG. 6B

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03012896 A1

- WO 2009096671 A2